# EUROPEAN PATENT APPLICATION

(11) **EP 4 779 763 A1**
(43) Date of publication of application: **22.07.2026**
(21) Application number: 25867152.8
(22) Date of filing: 28.04.2025
(51) Int. Cl.: H01M 50/103, H01M 10/615

(54) **BATTERY APPARATUS AND ELECTRIC APPARATUS**

(30) Priority: 08.11.2024 CN 202411595155
(71) Applicant: Contemporary Amperex Technology Co., Limited, Ningde, Fujian 352100 (CN)
(72) Inventor: LIANG, Yongguang, Ningde, Fujian 352100 (CN); LI, Xingxing, Ningde, Fujian 352100 (CN); HUANG, Xiaoteng, Ningde, Fujian 352100 (CN)
(74) Representative: Ran, Handong
(86) International application number: PCT/CN2025/091782
(87) International publication number: WO 2026/097798

(57) **Abstract**

The present application discloses a battery apparatus and an electric apparatus. The battery apparatus of the present application comprises a case body, a battery cell assembly, and a heating component. The battery cell assembly is located in an accommodating space, and comprises a plurality of battery cells arranged in a first direction. The first direction intersects a height direction of the case body. The heating component is located in the accommodating space and arranged between the battery cell assembly and a bottom wall of the case body. The heating component comprises a heating member and protective layers. In the height direction of the case body, the protective layers are respectively provided on both sides of the heating member. The protective layers on both sides of the heating member are connected to each other. The protective layers of the heating member play a role of protecting the heating member, and can prevent a metal foreign body from piercing the heating component, so as to reduce the probability of damage to the heating member of the heating component, thereby improving the reliability of the operation of the heating component.

## Description

### CROSS-REFERENCE TO RELATED APPLICATIONS

The present application claims priority to Chinese Patent Application No. 202411595155.4, filed on November 8, 2024 and entitled "Battery Apparatus and Electric Apparatus", which is incorporated herein by reference in its entirety.

### TECHNICAL FIELD

The present application relates to the technical field of batteries, and in particular, to a battery apparatus and an electric apparatus.

### BACKGROUND

A battery operating in a low temperature environment will affect the charge and discharge performance of the battery and affect the service life of the battery. In the process of heating battery cells in the battery by using a heating film, there is a problem that the heating reliability of the heating film is poor.

### SUMMARY

In view of the above problem, the present application provides a battery apparatus and an electric apparatus, which can improve the uneven heating of a battery.

In a first aspect, the present application provides a battery apparatus, comprising:
a case body, wherein an interior of the case body has an accommodating space;
a battery cell assembly located in the accommodating space, wherein the battery cell assembly comprises a plurality of battery cells arranged in a first direction, and the first direction intersects a height direction of the case body; and
a heating component located in the accommodating space and arranged between the battery cell assembly and a bottom wall of the case body, wherein the heating component comprises a heating member and protective layers, the protective layers are respectively provided on both sides of the heating member in the height direction of the case body, the protective layers on both sides of the heating member are connected to each other, the protective layers are insulated from the heating member, and the heating member is configured to generate heat when energized and used to heat the battery cell assembly.

The protective layers of the heating member play a role of protecting the heating member, and can prevent a metal foreign body from piercing the heating component, so as to reduce the probability of damage to the heating member of the heating component, thereby improving the reliability of the operation of the heating component. Especially when there are a plurality of heating components, the probability of the metal foreign body inside the case body piercing some of the heating components and causing the heating components to be damaged and inoperative can be reduced to enable the plurality of heating components to heat the battery cell assembly at the same time, so that the battery cell assembly is heated evenly.

In some embodiments, the protective layer of the heating member facing the bottom wall of the case body has at least two layers.

Therefore, multi-protection can be provided to reduce the probability of the metal foreign body on the bottom wall of the case body piercing the heating component, thereby improving the reliability of the operation of the heating component.

In some embodiments, the protective layer having at least two layers comprises:
an insulating film layer; and
a reinforcing layer located on one side of the insulating film layer facing away from the heating member, wherein the reinforcing layer is connected to the insulating film layer.

When there is a metal foreign body on the bottom wall of the case body, the reinforcing layer acts as a first layer of protection to prevent the metal foreign body from piercing into the heating component, and when the first layer of protection fails, the insulating film layer can further prevent the metal foreign body from penetrating the heating member, thereby improving the reliability of the operation of the heating component.

In some embodiments, the reinforcing layer comprises any one of an epoxy resin layer, a ceramic composite layer, a nylon polyester resin composite insulating film layer, or a polyurea coating layer.

Therefore, the effect of the heating component against metal piercing can be enhanced, so as to improve the reliability of the operation of the heating component.

In some embodiments, the thickness of the reinforcing layer is S, and the value range of S is 0.1 mm to 0.5 mm.

The thickness S of the reinforcing layer being equal to 0.1 mm can basically prevent the metal foreign body from piercing the heating member. As S increases, the difficulty of the metal foreign body piercing the heating member is also greater, and the reliability of the operation of the heating component is higher. However, an excessively thick reinforcing layer will occupy a larger space of the case body and affect the capacity of a battery apparatus. Thus, in the case of taking into account the piercing resistance of the reinforcing layer and the space occupied by the reinforcing layer, the value range of S is set to 0.1 mm to 0.5 mm.

In some embodiments, the value range of S is 0.15 mm to 0.25 mm.

S being equal to 0.15 mm can further improve the ability of the reinforcing layer to prevent the metal foreign body from piercing the heating member. In the case of taking into account the space occupied by the reinforcing layer, setting the value range of S to 0.15 mm to 0.25 mm can reduce the influence on the capacity of the battery apparatus on one hand, and at the same time can meet the piercing resistance requirement of the reinforcing layer for the metal foreign body.

In some embodiments, the heating component further comprises a glue layer, the glue layer is located on one side of the reinforcing layer facing away from the insulating layer, and the reinforcing layer is bonded to the bottom wall of the case body through the glue layer.

Therefore, the probability of the heating component deviating from a predetermined position may be reduced during installation and operation of the heating component to enable the heating component to heat the battery cell assembly at the predetermined position, thereby improving the uneven heating of the battery cell assembly caused by deviation from the predetermined position.

In some embodiments, the battery apparatus further comprises a structural glue layer, wherein the structural glue layer is located in the accommodating space and arranged between the battery cell assembly and the bottom wall of the case body, the battery cell assembly is bonded to the bottom wall of the case body through the structural glue layer, and the heating component is located in the structural glue layer.

The structural glue layer can fix the heating component and the battery cell assembly to the bottom wall of the case body, so that the battery cell assembly will not shake in the case body during operation, thereby improving the reliability and safety of the operation of the battery cell assembly, and the structural glue layer enables the heating component to be at the predetermined position of the bottom wall of the case body, so that the heating component heats the battery cells at the predetermined position, thereby improving the uneven heating of the battery cell assembly caused by deviation from the predetermined position.

In some embodiments, the heating member has a first heating region, a second heating region, and a third heating region, the first heating region is provided on one side of the second heating region in the first direction, the third heating region is provided on the other side of the second heating region in the first direction, the first heating region and the third heating region are respectively used to heat different battery cells which are outermost in the first direction, the size of the first heating region in the first direction is L1, the size of the second heating region in the first direction is L2, the size of the third heating region in the first direction is L3, the resistance of the first heating region is R1, the resistance of the second heating region is R2, the resistance of the third heating region is R3, R2/L2<R1/L1, and R2/L2<R3/L3.

When the temperature of an external environment is low, the battery cells closest to a side wall of the case body are greatly affected by the environment temperature, and the temperature is lower. R2/L2 is set to be less than R1/L1, and R2/L2 is set to be less than R3/L3, so that under the unit length of the heating member in the first direction, the heat generated by the first heating region and the third heating region of the heating member is greater than the heat of the second heating region, thereby improving the situation where the temperature of the battery cells at both ends of the battery cell assembly is too low.

In some embodiments, the first heating region, the second heating region, and the third heating region respectively have a bent portion, the length of the first heating region in an extending direction of the first heating region is L4, the length of the second heating region in an extending direction of the second heating region is L5, the length of the third heating region in an extending direction of the third heating region is L6, L4/L1>L5/L2, and L6/L3>L5/L2.

Therefore, on the premise that the cross sections and materials of the first heating region, the second heating region, and the third heating region are unchanged, L4/L1 being greater than L5/L2 and L6/L3 being greater than L5/L2 may increase the resistance value of the heating member per unit length in the first heating region and the third heating region in the first direction, so as to allow the heating member to generate a larger amount of heat per unit length in the first heating region and the third heating region in the first direction on the premise that the current is unchanged, thereby improving the situation where the temperature of the battery cells at both ends is too low.

In some embodiments, one heating member is provided, and the heating member has three heating sections connected in series, one of which is located in the second heating region, and the other two of which are located in the first heating region and the third heating region in one to-one correspondence.

Therefore, compared with providing a plurality of heating members, the structure of the heating member may be simplified to save costs.

In some embodiments, the heating component comprises at least two heating elements connected in parallel, and the at least two heating elements connected in parallel are configured to heat the battery cell assembly separately or simultaneously.

Changes in the external environment temperature have different influences on the battery cell assembly in the battery apparatus. Two heating members connected in parallel are provided, so that at least two heating members may be controlled to operate separately or simultaneously according to the influence of the external environment on the battery cell assembly, and the temperature of the battery cells may be adjusted according to the changes of the temperature of the external environment, so as to reduce excessive electrical energy consumption of the heating members, thereby improving the battery life of the battery apparatus.

In some embodiments, the battery apparatus further comprises a control switch, wherein the control switch is connected in series to each of the heating members to form parallel branches, each of the parallel branches is connected in parallel, and the battery cells are used to supply power to the parallel branches.

Therefore, each parallel branch may be operated or closed separately through the opening and closing of the control switch according to the temperature of the external environment, so that the temperature of the battery cells can be adjusted more flexibly, so as to reduce the influence of the low temperature on the battery cells, and save electrical energy at the same time.

In some embodiments, two heating members are provided, one of which is a first heating member and the other of which is a second heating member, the first heating member is located on one side of the second heating member in a second direction, at least a portion of the first heating member and at least a portion of the second heating member are respectively used to heat the battery cells that are outermost in the battery cell assembly in the first direction, and the second direction respectively intersects the first direction and the height direction of the case body.

Therefore, the battery cells at both ends of the battery cell assembly in the first direction may be heated simultaneously or separately through two heating members, so as to perform switchover according to the changes of the external environment. Especially when the temperature of the external environment is not too low, starting one heating member to operate can save electrical energy and improve the battery life of the battery apparatus.

In some embodiments, three or more battery cells are provided in the battery cell assembly, the first heating member comprises a first heating portion, a second heating portion, and a third heating portion, the first heating portion is connected in series to one side of the second heating portion in the first direction, the third heating portion is connected in series to the other side of the second heating portion in the first direction, the first heating portion and the third heating portion are respectively used to heat different battery cells which are outermost in the battery cell assembly in the first direction, and the second heating portion is used to heat the battery cells in the middle of the battery cell assembly.

Therefore, different battery cells which are outermost in the battery cell assembly in the first direction may be heated through the first heating portion and the third heating portion. The second heating portion may heat different battery cells which are outermost in the first direction, and the second heating portion may heat the middle battery cells. The first heating portion, the second heating portion, and the third heating portion may be configured as regions with different heat generating amounts according to the temperature changes of the battery cells when affected by the environment, so as to facilitate the adjustment of the temperature of the battery cells at different positions.

In some embodiments, the second heating portion is a straight resistance wire, a length direction of the straight resistance wire is the same as the first direction, the straight resistance wire has a first connecting end and a second connecting end, the first connecting end is connected in series to the first heating portion, and the second connecting end is connected in series to the third heating portion.

The second heating portion is a straight resistance wire. Compared with the second heating portion being a bent resistance wire, on the premise that the sizes of the two ends of the heating member in the first direction are unchanged and the voltages passing through the two ends of the heating member are unchanged, since the length of the straight resistance wire is shorter than that of a bent heating member, the resistance value thereof is smaller and the current passing therethrough is larger, so that the first heating portion and the third heating portion can generate higher heat, thereby reducing the influence of the low temperature of the external environment on the outermost battery cells of the battery cell assembly.

In some embodiments, the first heating portion and the third heating portion respectively have a first bent portion.

Therefore, on the premise that the sizes of the first heating portion and the third heating portion in the first direction are unchanged, the extending lengths of the first heating portion and the third heating portion may be increased by increasing the number of the first bent portions, so as to increase the resistance values of the first heating portion and the third heating portion.

In some embodiments, the second heating member comprises a first heating section, a second heating section, and a third heating section, the first heating section is connected in series to one end of the second heating section in the first direction, the third heating section is connected in series to the other end of the second heating section in the first direction, the first heating section and the third heating section are used to heat different battery cells which are outermost in the battery cell assembly in the first direction, and the second heating section is used to heat the battery cells in the middle of the battery cell assembly.

Therefore, the first heating section may be combined with the first heating portion, and the third heating section may be combined with the third heating portion, so as to heat different battery cells which are outermost in the battery cell assembly in the first direction, or the first heating section may be combined with the third heating portion, and the third heating section may be combined with the first heating portion, so as to heat different battery cells which are outermost in the battery cell assembly in the first direction. Through the opening and closing of the control switch, the first heating section and the third heating section may be allowed to operate or not operate at the same time, and the first heating portion and the third heating portion may be allowed to operate or not operate at the same time, so that the temperature of the battery cell assembly can be adjusted more flexibly.

In some embodiments, the first heating section, the second heating section, and the third heating section respectively have a second bent portion.

Therefore, the overall length of the second heating member may be increased by bending the first heating section, the second heating section, and the third heating section, so as to increase the heating area of the battery cells, thereby enabling the battery cells to be heated more evenly.

In some embodiments, the size of the second heating section in the second direction is D1, the maximum size between the second heating section and the second heating portion in the second direction is D2, and the value range of D1/D2 is 0.1 to 0.98.

D1/D2 being equal to 0.1 can basically meet the heating area of the battery cells in the middle of the battery cell assembly. As D1/D2 increases, the heating area of the battery cells in the middle of the battery cell assembly also increases, and the resistance value of the second heating section also increases, which will also increase the manufacturing cost. In order to take into account the manufacturing cost and better improve the temperature of the battery cells, the value range of D1/D2 is set to 0.7 to 0.98.

In some embodiments, the value range of D1/D2 is 0.7 to 0.95. On the premise that the manufacturing cost is taken into account and the battery cells in the middle of the battery cell assembly can perform better at low temperature, the value range of D1/D2 is set to 0.7 to 0.95.

In some embodiments, the value range of D1 is 25 mm to 90 mm.

D1 being equal to 25 mm can basically meet the heating area of the battery cells in the middle of the battery cell assembly. As D1 increases, the heating area of the battery cells also increases, and when D1 is too large, the manufacturing cost will increase. In order to take into account the manufacturing cost and better improve the temperature of the battery cells, the value range of D1 is set to be between 25 mm to 90 mm, and at the same time, the heating requirements of battery cells of different specifications may be met.

In some embodiments, the value range of D1 is 40 mm to 60 mm. Therefore, the heating area of the battery cells may be further increased, and the manufacturing cost of the heating component may be reduced.

In some embodiments, a plurality of battery cell assemblies are provided, and the heating component is arranged between each of battery cell assemblies and the bottom wall of the case body.

Therefore, in the process of the heating components operating simultaneously to heat the battery cell assemblies, part of the heat is transferred to the bottom wall of the case body, and the bottom wall of the case body may heat the plurality of battery cell assemblies at the same time, so that the plurality of battery cell assemblies are heated more evenly.

In a second aspect, the present application provides an electric apparatus, comprising the battery apparatus in the first aspect, wherein the battery apparatus is used to provide electrical energy to the electric apparatus.

Since the electric apparatus comprises all the technical features of the battery apparatus described above, the effects are the same as those described above, and will not be repeated here.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is an exploded view of a battery cell according to an embodiment of the present application;
FIG. 2 is an exploded view of a battery apparatus according to an embodiment of the present application;
FIG. 3 is a structural view of an electric apparatus being a vehicle according to an embodiment of the present application;
FIG. 4 is an exploded view of a heating component according to an embodiment of the present application;
FIG. 5 is a schematic structural view of a heating member according to an embodiment of the present application;
FIG. 6 is an exploded view of another heating component according to an embodiment of the present application;
FIG. 7 is a top view of the heating member of FIG. 6; and
FIG. 8 is a circuit diagram of a heating component and a heating member forming the current according to the present application.

Reference numerals in specific implementations are as follows:
1000: vehicle;
100: battery apparatus;
10: case body; 11: first case body; 12: second case body;
20: battery cell assembly; 21: battery cell; 211: casing; 2111: end cover; 21111: electrode terminal; 2112: casing body; 212: electrode assembly; 213: pressure relief mechanism; 214: current collecting member;
30: heating component; 31: heating member; 311: first heating member; 312: second heating member; 313: first heating region; 3131: first heating portion; 3132: first heating section; 314: second heating region; 3141: second heating portion; 3142: second heating section; 315: third heating region; 3151: third heating portion; 3152: third heating section; 32: protective layer; 321: reinforcing layer; 322: insulating film layer; 33: glue layer;
40: control switch; 50: fuse;
X: first direction; Y: second direction; Z: height direction.

### DETAILED DESCRIPTION OF PREFERRED EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless otherwise defined, all technical and scientific terms used herein have the same meaning as commonly understood by those skilled in the art to which the present application belongs. The terms used herein are merely for the purpose of describing specific embodiments and are not intended to limit the present application. The terms "comprise", "have", and any variants thereof in the specification and claims of the present application as well as in the brief description of the drawings above are intended to cover a non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that: A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise explicitly specified and defined, the technical terms "mounted", "connected to", "connect", "fixed", etc. should be understood in a broad sense, which, for example, may be understood as fixed connection, detachable connection, or integral connection, may be understood as mechanical connection, or electrical connection, or may be understood as direct connection, indirect connection via an intermediate medium, or communication between the interiors of two elements or interaction between two elements. A person of ordinary skill in the art may understand the specific meanings of the above terms in the embodiments of the present application according to specific situations.

A case body of a battery contains a plurality of battery cells, and the plurality of battery cells need to be heated in an external low-temperature environment, to reduce the influence of the low temperature on the performance of the battery cells. At present, in the process of heating the plurality of battery cells by using a heating film, there is a problem that the reliability of the heating film is poor, which causes a large temperature difference between different battery cells and affects the performance of the battery cells.

In view of this, the present application provides a battery apparatus, where a heating component is arranged between a bottom wall of a case body and a battery cell assembly. Protective layers of a heating member play a role of protecting the heating member, and can prevent a metal foreign body from piercing the heating component, so as to reduce the probability of damage to the heating member of the heating component, thereby improving the reliability of the operation of the heating component. Especially when there are a plurality of heating components, the probability of the metal foreign body inside the case body piercing some of the heating components and causing the heating components to be damaged and inoperative can be reduced to enable the plurality of heating components to heat the battery cell assembly at the same time, so that the battery cell assembly is heated evenly.

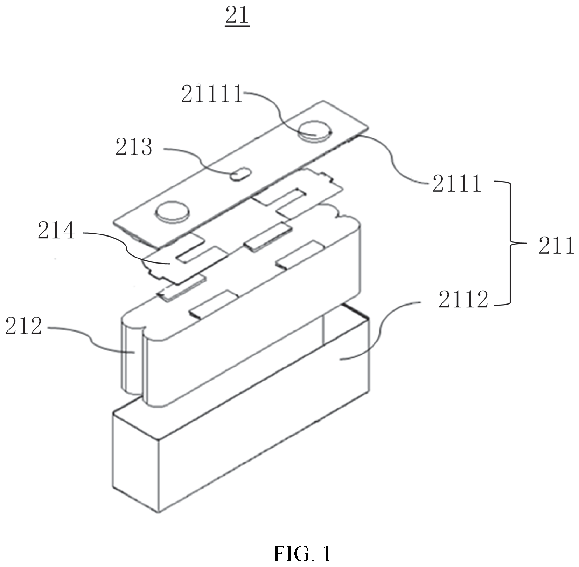

Referring to FIG. 1, the battery cell 21 generally comprises an electrode assembly 212. The electrode assembly 212 comprises a positive electrode, a negative electrode, and a spacer arranged between the positive electrode and the negative electrode. During charge and discharge of the battery cell 21, intercalation/de-intercalation of active ions (e.g., lithium ions) are enabled at the positive electrode and negative electrode by moving the active ions between the positive electrode and negative electrode. The spacer is arranged between the positive electrode and the negative electrode to prevent the positive and negative electrodes from being short-circuited and to allow active ions to pass therethrough.

In some embodiments, the positive electrode may be a positive plate which may comprise a positive current collector and a positive active material disposed on at least one surface of the positive current collector.

As an example, the positive current collector has two surfaces opposite in the thickness direction thereof, and the positive active material is provided on either one or both of the two opposite surfaces of the positive current collector.

As an example, a metal foil, a conductive polymer material, a carbon material, or a composite current collector may be used for the positive current collector. For example, as the metal foil, pure metal, alloy, or surface-treated metal, including but not limited to stainless steel, copper, aluminum, nickel, titanium, silver, or the like, may be used. The composite current collector may comprise a macromolecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a macromolecular material (a substrate of polypropylene, polyethylene terephthalate, polybutylene terephthalate, polystyrene, polyethylene, or the like).

As an example, the positive active material may comprise at least one of the following materials: a lithium-containing phosphate, a lithium transition metal oxide, and respective modified compounds thereof. However, the present application is not limited to these materials, and other conventional materials that can be used as a positive active material of a battery may also be used. These positive active materials may be used alone or in combination of two or more thereof. Here, examples of the lithium-containing phosphate may include, but are not limited to, at least one of lithium iron phosphate (e.g., LiFePO₄, also referred to as LFP), a composite material of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. Examples of the lithium transition metal oxide may include, but are not limited to, at least one of lithium cobalt oxide (e.g., LiCoO₂), lithium nickel oxide (for example, LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3} Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.8}Co_{0.15}Al_{0.05}O₂), modified compounds thereof, and the like. The modified compounds refer to substances obtained by modification methods such as doping or coating based on the above-described substances.

In some embodiments, a foamed metal may be used for the positive electrode. The foamed metal may be foamed nickel, foamed copper, foamed aluminum, foamed alloy, foamed carbon, or the like. When the foamed metal is used as the positive electrode, the surface of the foamed metal may not be provided with the positive active material, and of course, the positive active material may also be provided. As an example, the positive active material is filled or/and deposited in the foamed metal.

In some embodiments, the negative electrode may be a negative plate that may comprise a negative current collector.

As an example, a metal foil, a conductive polymer material, a carbon material, or a composite current collector may be used for the negative current collector. For example, as the metal foil, pure metal, alloy, or surface-treated metal, including but not limited to stainless steel, copper, aluminum, nickel, titanium, silver, or the like, may be used. The composite current collector may include a macromolecular material base layer and a metal layer. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the negative plate may comprise a negative current collector and a negative active material provided on at least one surface of the negative current collector.

As an example, the negative current collector has two surfaces opposite in its own thickness direction, and the negative active material is provided on either one or both of the two opposite surfaces of the negative current collector.

As an example, the negative active material may use a negative active material which is known in the art for a battery cell 21. As an example, the negative active material may comprise at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as a negative active material of the battery cell 21 may also be used. These negative active materials may be used alone or in combination of two or more thereof.

In some embodiments, a foamed metal may be used for the negative electrode. The foamed metal may be foamed nickel, foamed copper, foamed aluminum, foamed alloy, foamed carbon, or the like. When the foamed metal is used as the negative plate, the surface of the foamed metal may not be provided with the negative active material, and of course, the negative active material may be also provided.

As an example, the negative active material may be filled or/and deposited in the negative current collector.

In some embodiments, the material of the positive current collector may be aluminum and the material of the negative current collector may be copper.

In some embodiments, the spacer is a separator. The type of the separator is not particularly limited in the present application, and any well-known porous separator with good chemical stability and mechanical stability may be used.

As an example, the main material of the separator may be selected from at least one of glass fiber, non-woven fabric, polyethylene, polypropylene, polyvinylidene fluoride, and ceramics. The separator may be a single-layer thin film or may be a multi-layer composite thin film, which is not particularly limited. When the separator is a multi-layer composite thin film, materials of each layer may be the same or different, which is not particularly limited. The spacer may be a single component located between the positive electrode and negative electrode, or may be attached to the surfaces of the positive electrode and negative electrode. The surface of the separator may be further coated with an inorganic particle coating layer, an organic particle coating layer, or an organic/inorganic composite coating layer.

In some implementations, the spacer is a solid electrolyte. The solid electrolyte is disposed between the positive electrode and the negative electrode, and serves to transfer ions and separate the positive electrode and negative electrode.

In some implementations, the battery cell 21 further comprises an electrolyte that functions to conduct ions between the positive electrode and negative electrode. The type of the electrolyte is not specifically limited in the present application, and may be selected according to a requirement. The electrolyte may be liquid, gel, or solid.

Here, a liquid electrolyte comprises an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from ether solvents. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1, 3-dioxolane, tetrahydrofuran, methyltetrahydrofuran, diphenyl ether, and a crown ether.

In some embodiments, the electrolyte solution optionally further includes an additive. For example, the additive may comprise a negative film-forming additive or a positive film-forming additive, and may further comprise an additive capable of improving certain performance of the battery cell 21, for example, an additive for improving over-charge/rapid-charge performance of the battery cell 21, an additive for improving high-temperature performance of the battery cell 21, an additive for improving low-temperature performance of the battery cell 21, etc.

Here, the gel-state electrolyte comprises a polymer as a skeleton network, and may be used in combination with an ionic liquid-lithium salt.

Here, the solid electrolyte comprises a polymer solid electrolyte, an inorganic solid electrolyte, and a composite solid electrolyte.

As an example, the polymer of the polymer solid electrolyte may comprise polyether (polyethylene oxide), polysiloxane, polycarbonate, polyacrylonitrile, polyvinylidene fluoride, polymethyl methacrylate, a single-ion polymer, a poly-ionic liquid, cellulose, or the like.

As an example, the inorganic solid electrolyte may be one or more of an oxide solid electrolyte (crystalline perovskites, Na superconducting ion conductors, and garnets, amorphous LiPON thin films), a sulfide solid electrolyte (crystalline lithium-superion conductors (lithium germanium phosphorus sulfide, and argyrodite), and amorphous sulfides), and a halide solid electrolyte, a nitride solid electrolyte, and a hydride solid electrolyte.

As an example, the composite solid electrolyte is formed by adding an inorganic solid electrolyte filler in a polymer solid electrolyte.

In some implementations, the electrode assembly 212 is of a winding structure. The positive plate and the negative plate are wound in a winding structure.

As an example, a plurality of positive plates and a plurality of negative plates may be respectively provided, and are alternately laminated.

In some implementations, the electrode assembly 212 may have a cylindrical shape, a flat shape, a polygonal column shape, or the like.

In some implementations, the electrode assembly 212 is provided with a tab 21 that may conduct current from the electrode assembly 212. The tab comprises a positive tab and a negative tab.

In some implementations, referring to FIG. 1, the battery cell 21 may comprise a casing 211. The casing 211 may be a steel casing, an aluminum casing, a plastic casing (e.g., polypropylene), a composite metal casing (e.g., a copper-aluminum composite casing 1), an aluminum plastic film, or the like.

In some embodiments, the casing 211 may be of a sealed structure, or may be of a non-sealed structure. As an example, when the casing 211 is of a non-sealed structure, the casing 211 plays a role of protecting the electrode assembly 212. A sealing bag is further comprised between the casing 211 and the electrode assembly 212, which is used to package the electrode assembly 212 and the electrolyte. Specifically, the sealing bag may be a bag-shaped insulating member or an aluminum plastic film. When the casing 211 is of a sealed structure, same is used to package components such as the electrode assembly 212 and the electrolyte.

As an example, the battery cell 21 may be a cylindrical battery cell, a prismatic battery cell, a pouch battery cell, or a battery cell of other shapes. The prismatic battery cell comprises a squarehousing battery cell, a blade-shaped battery cell, and a multi-prism battery cell, for example, a hexagonal prism battery cell, and the like, which is not particularly limited by the present application.

In some implementations, referring to FIG. 1, the casing 211 comprises an end cover 2111 and a casing body 2112. The casing body 2112 is provided with an opening, and the end cover 2111 covers the opening. The casing body 2112 may be provided with one or more openings. One or more end covers 2111 may also be provided.

In some implementations, referring to FIG. 1, the casing 211 is provided with at least one electrode terminal 21111 thereon, which is electrically connected to a tab. The electrode terminal 21111 may be directly connected to the tab, or may be indirectly connected to the tab through a current collecting member 214. The electrode terminal 21111 may be disposed on the end cover 2111, or may be disposed on the casing body 2112.

In some implementations, referring to FIG. 1, a pressure relief mechanism 213 is provided on the casing 211. The pressure relief mechanism 213 is used to discharge the internal gas of the battery cell 21.

As an example, when the internal pressure or temperature of the battery cell 21 reaches a predetermined threshold value, the pressure relief mechanism 213 is actuated to release the internal pressure or temperature. When the internal pressure or temperature of the battery cell 21 reaches the predetermined threshold value, the pressure relief mechanism 213 performs an action or a weak structure provided in the pressure relief mechanism 213 is broken, thereby forming an opening or a channel for releasing the internal pressure or temperature. The threshold value design varies depending on design requirements. The threshold value may depend on the material of one or more of the positive plate, the negative plate, the electrolyte, and the spacer in the battery cell 21.

As an example, the pressure relief mechanism 213 may be integrally formed with casing 211.

As an example, the pressure relief mechanism 213 may also be provided separately from the casing 211 and connected to the casing 211.

"Actuate" mentioned in the present application refers to that the pressure relief mechanism 213 takes an action or is activated to a certain state such that the internal pressure and temperature of the battery cell 21 is released. The action taken by the pressure relief mechanism 213 may include, but is not limited to: movement of the components in the pressure relief mechanism 213 to form an exhaust channel, breaking, rupturing, tearing, or opening, etc. of at least a portion of the pressure relief mechanism 213. When the pressure relief mechanism 213 is actuated, a high-temperature and high-pressure substance inside the battery cell 21 is discharged outward from an actuated portion as an emission. In this way, the battery cell 21 can release pressure and temperature under controllable pressure or temperature conditions, thereby avoiding the occurrence of potential more serious accidents.

In some embodiments, when the casing 211 is of an non-sealed structure, the pressure relief mechanism 213 may be provided with a through hole for discharging the gas inside the battery cell 21.

The emissions from the battery cell 21 mentioned in the present application include, but are not limited to: electrolytes, dissolved or fragmented positive and negative plates, fragments of the spacer, high-temperature and high-pressure gases generated by reactions, flames, and the like.

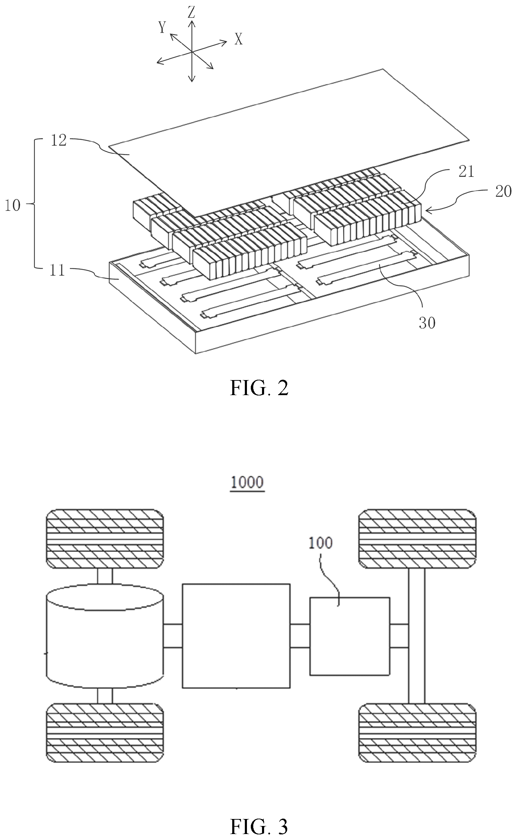

Referring to FIG. 2, a battery apparatus100 mentioned in the embodiments of the present application may comprise one or more battery cell assemblies 20 for providing voltage and capacity. The battery cell assembly 20 may comprise a plurality of battery cells 21 which are connected in series, in parallel, or in series-parallel by means of a bus component.

In some embodiments, the battery cell assembly 20 is usually formed by arranging the plurality of battery cells 21.

As an example, the battery cell assembly 20 may be a battery module which is an independent module formed by arranging and fixing the plurality of battery cells 21. As an example, the battery module may be formed by bundling a plurality of battery cells 21 by means of a cable tie.

In some embodiments, the battery apparatus 100 may be a battery pack, comprising a case body 10 and one or more battery cell assemblies 20 accommodated in the case body 10.

As an example, the battery cell assembly 20 may be a battery module, and the battery cell assembly 20 may be accommodated in the case body 10 by means of fixing the battery module in the case body 10.

As an example, the battery cell assembly 20 may also be accommodated in the case body 10 by means of directly fixing the plurality of battery cells 21 in the case body 10.

As an example, referring to FIG. 2, the case body 10 may comprise a first case body 11 and a second case body 12. The first case body 11 is snapped with the second case body 12, so that a closed space is formed inside the case body 10 to receive the battery cell assembly 20. Here, "closed" refers to being covered or closed, which may be sealed, or may be non-sealed. The first case body 11 may be a top cover or a bottom plate.

As an example, the case body 10 may comprise a top cover, a frame, and a bottom plate. The top cover and the bottom plate are respectively connected to the frame, so that a closed space is formed inside the case body 10 to receive the battery cell assembly 20.

In some embodiments, referring to FIG. 3, the case body 10 may be a part of a chassis structure of a vehicle 1000. For example, a part of the case body 10 may be at least a part of a floor of the vehicle 1000, or a part of the case body 10 may be at least a part of a cross beam and a longitudinal beam of the vehicle 1000.

The technical solutions described in the embodiments of the present application are all applicable to various electric apparatuses using battery cells 21, for example, a mobile phone, a portable device, a notebook computer, an electric vehicle, an electric toy, an electric tool, the vehicle 1000, a ship, and a spacecraft, and for example, the spacecraft comprises an aircraft, a rocket, a space shuttle, and a spacecraft.

For ease of description, referring to FIGS. 1, 2, and 4-8, the following embodiments are described by taking a battery apparatus 100 in some embodiments of the present application as an example.

The battery apparatus 100 comprises a case body 10, a battery cell assembly 20, and a heating component 30. Here, an interior of the case body 10 has an accommodating space. The battery cell assembly 20 is located in the accommodating space, and comprises a plurality of battery cells 21 arranged in a first direction X. The first direction X intersects a height direction Z of the case body 10. The heating component 30 is located in the accommodating space and arranged between the battery cell assembly 20 and a bottom wall of the case body 10. The heating component 30 comprises a heating member 31 and protective layers 32. The protective layers 32 are respectively provided on both sides of the heating member 31 in the height direction Z of the case body 10. The protective layers 32 on both sides of the heating member 31 are connected to each other. The protective layers 32 are insulated from the heating member 31. The heating member 31 is configured to generate heat when energized and is used to heat the battery cell assembly 20.

There may be one or a plurality of battery cell assemblies 20. For example, there are a plurality of battery cell assemblies 20, and the plurality of battery cell assemblies 20 are arranged in a substantially rectangular array in the case body 10, or may be arranged in a straight line, which may be specifically set and arranged according to actual usage requirements.

The contour shape of the cross section of the heating member 31 includes, but is not limited to, a circle, a rectangle, an ellipse, or the like.

Optionally, the heating component 30 may be fixed to the case body 10 by means of bonding or hot melt welding, or a positioning groove may be provided on an inner surface of the bottom wall of the case body 10. The heating component 30 is placed in the positioning groove, so as to reduce the probability of the heating component 30 deviating from a predetermined position during the assembly process.

The case body 10 may be of, but is not limited to, the structures listed in the above embodiments. For example, the first case body 11 may be of a structure similar to a tray, and the second case body 12 may be of a structure having a top wall and a side wall. The second case body 12 is located above the first case body 11, and the first case body 11 is snapped with the second case body 12. The first case body 11 may also be of a structure having a bottom wall and a side wall, and the second case body 12 may be of a plate-like structure. One side of the second case body 12 facing the first case body 11 may also be configured as a groove structure to accommodate the battery cells 21.

The heating component 30 is located between the bottom wall of the case body 10 and the battery cell assembly 20, and can transfer heat to the bottom wall of the case body 10 and then transfer it to the battery cells 21 through the bottom wall in a heat radiation manner. Since the bottom wall covers the battery cell assembly 20, the radiation surface is relatively large, so that the plurality of battery cells 21 can be evenly heated.

The protective layer 32 may have one layer or multiple layers. For example, the protective layer 32 may be an insulating film layer 322 having an insulating function. The protective layer 32 on at least one side of the heating member 31 may also have at least two layers, which provides at least two layers of protection for the heating member 31 and can prevent a metal foreign body from piercing the heating component 30, so as to reduce the probability of damage to the heating member 31 of the heating component 30, thereby improving the reliability of the operation of the heating component 30. Especially when there are a plurality of heating components 30, the probability of the metal foreign body in the case body 10 piercing some of the heating components 30 and causing the heating components 30 to be damaged and inoperative can be reduced to enable the plurality of heating components 30 to heat the battery cell assembly 20 at the same time, so that the battery cell assembly 20 is heated more evenly.

In some embodiments, the protective layer 32 of the heating member 31 facing the bottom wall of the case body 10 has at least two layers.

The protective layer 32 of the heating member 31 facing away from the case body 10 may have one layer, or may have two or more layers.

When the protective layer 32 has multiple layers, the materials of the multiple layers of protective layers 32 may be the same, or may be different.

Therefore, multi-protection can be provided to reduce the probability of the metal foreign body on the bottom wall of the case body 10 piercing the heating component 30, thereby improving the reliability of the operation of the heating component 30.

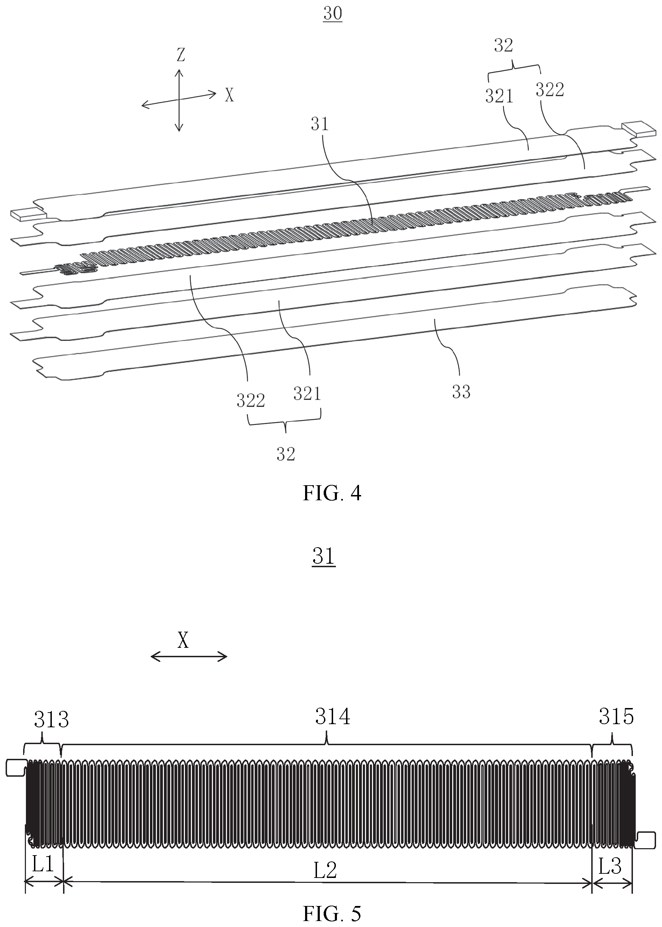

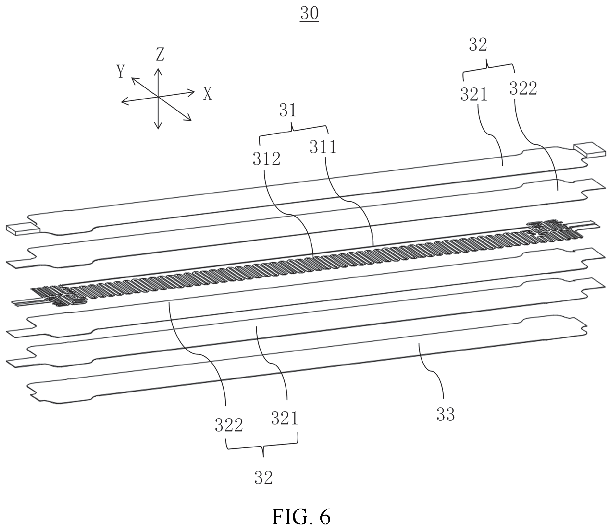

In some embodiments, referring to FIGS. 4 and 6, the protective layer 32 having at least two layers comprises an insulating film layer 322 and a reinforcing layer 321. The reinforcing layer 321 is located on one side of the insulating film layer 322 facing away from the heating member 31, and the reinforcing layer 321 is connected to the insulating film layer 322.

The insulating film layer 322 includes, but is not limited to, any one of a polyimide film layer, a polyvinyl fluoride film layer, a polyamide film layer, a polyphenylene ether film layer, a silicon oxide layer, a silicon nitride layer, an aluminum nitride layer, or the like.

As an example, in the height direction Z of the case body 10, both the protective layer 32 of the heating member 31 facing the bottom wall of the case body 10 and the protective layer 32 of the heating member 31 facing away from the bottom wall of the case body 10 may comprise the insulating film layer 322 and the reinforcing layer 321. On the same side of the heating member 31 in the height direction Z of the case body 10, the reinforcing layer 321 is located on one side of the insulating film layer 322 facing away from the heating member 31. The insulating film layer 322 is fixed to the heating member 31 by means of bonding, so as to preliminarily fix the heating member 13. The reinforcing layers 321 on both sides of the heating member 31 may be connected by means of hot melt welding, so that the reinforcing layers 321 on both sides of the heating member 31 form an integrated structure.

The materials of the insulating film layers 322 on both sides of the heating member 31 may be the same, or may be different.

When there is a metal foreign body on the bottom wall of the case body 10, the reinforcing layer 321 acts as a first layer of protection to prevent the metal foreign body from piercing into the heating component 30, and when the first layer of protection fails, the insulating film layer 322 can further prevent the metal foreign body from piercing the heating member 31, thereby improving the reliability of the operation of the heating component 30.

In some embodiments, the reinforcing layer 321 comprises any one of an epoxy resin layer, a ceramic composite layer, a nylon polyester resin composite insulating film layer, or a polyurea coating layer.

The ceramic composite layer includes, but is not limited to, a ceramic silica gel layer or a ceramic polymer coating layer.

Therefore, the effect of the heating component 30 against metal piercing can be enhanced, so as to improve the reliability of the operation of the heating component 30.

In some embodiments, the thickness of the reinforcing layer 321 is S, and the value range of S is 0.1 mm to 0.5 mm.

The thickness S of the reinforcing layer 321 being equal to 0.1 mm can basically prevent the metal foreign body from piercing the heating member 31. As S increases, the difficulty of the metal foreign body piercing the heating member 31 is also greater, and the reliability of the operation of the heating component 30 is higher. However, an excessively thick reinforcing layer 321 will occupy a larger space of the case body 10 and affect the capacity of the battery apparatus 100. Thus, in the case of taking into account the piercing resistance of the reinforcing layer 321 and the space occupied by the reinforcing layer 321, the value range of S is set to 0.1 mm to 0.5 mm.

In some embodiments, the value range of S is 0.15 mm to 0.25 mm.

S being equal to 0.15 mm can further improve the ability of the reinforcing layer 321 to prevent the metal foreign body from piercing the heating member 31. In the case of taking into account the space occupied by the reinforcing layer 321, setting the value range of S to 0.15 mm to 0.25 mm can reduce the influence on the capacity of the battery apparatus 100 on one hand, and at the same time can meet the piercing resistance requirement of the reinforcing layer 321 for the metal foreign body.

In some embodiments, referring to FIGS. 4 and 6, the heating component 30 further comprises a glue layer 33. The glue layer 33 is located on one side of the reinforcing layer 321 facing away from the insulating layer, and the reinforcing layer 321 is bonded to the bottom wall of the case body 10 through the glue layer 33.

The glue layer 33 may be a double-sided glue layer, or may be formed by applying a glue on an outer surface of the reinforcing layer 321 and solidifying same.

The glue layer 33 may be a glue layer with a heat conduction property, that is, the reinforcing layer 321 is bonded to the bottom wall of the case body 10 through a glue with a heat conduction property, and the glue is solidified to form the glue layer, so that some of the heat can be transferred to the bottom wall of the case body 10 through the heating member, and then transferred to the battery cell assembly 20 through the bottom wall of the case body 10.

Therefore, the probability of the heating component 30 deviating from a predetermined position may be reduced during installation and operation of the heating component 30 to enable the heating component 30 to heat the battery cell assembly 20 at the predetermined position, thereby improving the uneven heating of the battery cell assembly 20 caused by deviation from the predetermined position.

In some embodiments, the battery apparatus 100 further comprises a structural glue layer, wherein he structural glue layer is located in the accommodating space and arranged between the battery cell assembly 20 and the bottom wall of the case body 10, the battery cell assembly 20 is bonded to the bottom wall of the case body 10 through the structural glue layer, and the heating component 30 is located in the structural glue layer.

As an example, the reinforcing layer 321 is bonded to the bottom wall of the case body 10 through the glue layer 33, and then a glue is poured into the bottom wall of the case body 10. The glue may be a glue with an insulating property. The battery unit assembly 20 is fixed via the glue, the heating component 30 is immersed in the glue, and a structural glue layer is formed after the glue is solidified.

The structural glue layer can fix the heating component 30 and the battery cell assembly 20 to the bottom wall of the case body 10, so that the battery cell assembly 20 will not shake in the case body 10 during operation, thereby improving the reliability and safety of the operation of the battery cell assembly 20, and the structural glue layer enables the heating component 30 to be at the predetermined position of the bottom wall of the case body 10, so that the heating component 30 heats the battery cells 21 at the predetermined position, thereby improving the uneven heating of the battery cell assembly 20 caused by deviation from the predetermined position.

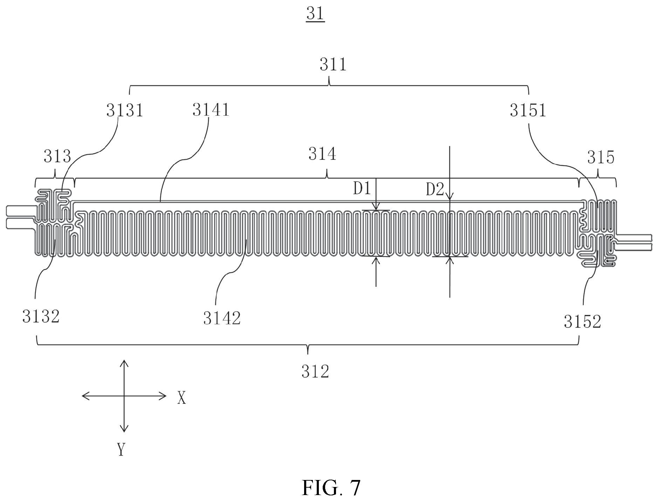

In some embodiments, referring to FIGS. 5 and 7, the heating member 31 has a first heating region 313, a second heating region 314, and a third heating region 315. The first heating region 313 is provided on one side of the second heating region 314 in the first direction X, the third heating region 315 is provided on the other side of the second heating region 314 in the first direction X, and the first heating region 313 and the third heating region 315 are respectively used to heat different battery cells 21 which are outermost in the first direction X. The size of the first heating region 313 in the first direction X is L1, the size of the second heating region 314 in the first direction X is L2, the size of the third heating region 315 in the first direction X is L3, the resistance of the first heating region 313 is R1, the resistance of the second heating region 314 is R2, and the resistance of the third heating region 315 is R3, where R2/L2<R1/L1, and R2/L2<R3/L3.

On the premise that the materials and cross sections of the first heating region 313, the second heating region 314, and the third heating region 315 are unchanged, the number of bends of the first heating region 313 and the third heating region 315 may be increased, that is, the heating members 31 of the first heating region 313 and the third heating region 315 are coiled more densely than those of the second heating region 314, so that the resistance of the first heating region 313 and the third heating region 315 per unit length in the first direction X is greater than the resistance of the second heating region 314 per unit length in the first direction X, and thus under the unit length in the first direction X, the first heating region 313 and the third heating region 315 generate a larger amount of heat under the same current, so as to reduce the influence of the external environment temperature on the battery cells 21 at both ends. The first heating region 313 and the third heating region 315 may also be made of a material with a greater resistivity than that of the second heating region 314, so that the resistance of the first heating region 313 and the third heating region 315 per unit length in the first direction X is greater than the resistance of the second heating region 314 per unit length in the first direction X, and thus under the unit length in the first direction X, the first heating region 313 and the third heating region 315 generate a larger amount of heat under the same current.

When the temperature of an external environment is low, the battery cells 21 closest to a side wall of the case body 10 are greatly affected by the environment temperature, and the temperature is lower. R2/L2 is set to be less than R1/L1, and R2/L2 is set to be less than R3/L3, so that under the unit length of the heating member 31 in the first direction X, the heat generated by the first heating region 313 and the third heating region 315 of the heating member 31 is greater than the heat of the second heating region 314, thereby improving the situation that the temperature of the battery cells 21 at both ends of the battery cell assembly 20 is too low.

In some embodiments, referring to FIGS. 5 and 7, the first heating region 313, the second heating region 314, and the third heating region 315 respectively have a bent portion. The length of the first heating region 313 in an extending direction of the first heating region 313 is L4, the length of the second heating region 314 in an extending direction of the second heating region 314 is L5, and the length of the third heating region 315 in an extending direction of the third heating region 315 is L6, where L4/L1>L5/L2, and L6/L3>L5/L2.

The bent portion refers to a portion where the heating member 31 is bent.

L4 is the length of the first heating region 313 when unfolded into a straight line, L5 is the length of the second heating region 314 when unfolded into a straight line, and L6 is the length of the third heating region 315 when unfolded into a straight line.

Therefore, on the premise that the cross sections and materials of the first heating region 313, the second heating region 314, and the third heating region 315 are unchanged, L4/L1 being greater than L5/L2 and L6/L3 being greater than L5/L2 may increase the resistance value of the heating member 31 per unit length in the first heating region 313 and the third heating region 315 in the first direction X, so as to allow the heating member 31 to generate a larger amount of heat per unit length in the first heating region 313 and the third heating region 315 in the first direction X on the premise that the current is unchanged, thereby improving the situation where the temperature of the battery cells 21 at both ends is too low.

In some embodiments, referring to FIG. 5, one heating member 31 is provided, and the heating member 31 has three heating sections connected in series, one of which is located in the second heating region 314, and the other two of which are located in the first heating region 313 and the third heating region 315 in one to-one correspondence.

As shown in FIG. 5, three heating sections corresponding to three heating regions in the heating member are connected in series to form a resistance wire or a resistance sheet, and the resistance wire or the resistance sheet in the three heating sections is formed by bending and coiling.

The three heating sections may be configured as heating sections each having a bent portion, or the first heating region 313 and the third heating region 315 may be configured as heating sections having a bent portion, and the second heating region 314 may be configured as a straight heating wire. When a material with a high resistivity is used, the heating section may not be provided, and the three heating sections are all straight heating wires.

The value range of the resistivity of the heating member 31 may be set to 0.07 Ωmm²/m-50 Ωmm². The high resistivity of the heating member 31 can reduce the number of bent portions.

Therefore, compared with providing a plurality of heating members 31, the structure of the heating member 31 may be simplified to save costs.

In some embodiments, the material of the heating member 31 includes, but is not limited to, any one of stainless steel, a copper-manganese alloy, a tungsten-molybdenum alloy, an iron-chromium-aluminum alloy, an iron-nickel-aluminum alloy, a nickel-chromium-aluminum alloy, a nickel-chromium alloy, a nickel-molybdenum-aluminum alloy, an iron-nickel-chromium-molybdenum-copper alloy, a gold-nickel-copper alloy, a gold-nickel-chromium alloy, a gold-palladium-iron-aluminum alloy, and the like.

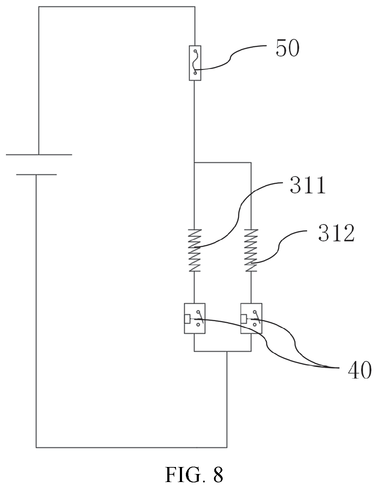

In some embodiments, referring to FIGS. 7 and 8, the heating component 30 comprises at least two heating members 31 connected in parallel, and the at least two heating members 31 connected in parallel are configured to heat the battery cell assembly 20 separately or simultaneously.

When the length of the battery cells 21 in the battery cell assembly 20 is large, for example, when the battery cells 21 are blade battery cells 21, the heating area of the battery cell assembly 20 is large. When two heating members 31 connected in parallel are used, the coiling length of the heating members 31 is large, which is not easy to manufacture, and when the heating members 31 are damaged, the heating of the entire battery cell assembly 20 will be stopped. At this time, it is possible to provide three or more heating members 31 connected in parallel in the heating component 30, and specifically, the number of the heating members 31 may be determined according to the length of a single battery cell 21 in the blade battery cell assembly 20, so as to, on one hand, improve the reliability of the heating component 30 during operation, and on the other hand, facilitate the manufacturing of the heating component 30, and facilitate the corresponding adjustment the local temperature of the battery cell assembly 20. Using at least two heating members 31 connected in parallel to heat the battery cell assembly 20 is more flexible. When the length of the battery cells 21 in the battery cell assembly 20 is small, two heating members 31 connected in parallel may be provided, so as to selectively operate one or two heating members 31 according to the environment temperature in the heating process.

Changes in the external environment temperature have different influences on the battery cell assembly 20 in the battery apparatus 100. Two heating members 31 connected in parallel are provided, so that at least two heating members 31 may be controlled to operate separately or simultaneously according to the influence of the external environment on the battery cell assembly 20, and the temperature of the battery cells 21 may be adjusted according to the changes of the temperature of the external environment, so as to reduce excessive electrical energy consumption of the heating members 31, thereby improving the battery life of the battery apparatus 100.

In some embodiments, referring to FIG. 7 and FIG. 8, the battery apparatus 100 further comprises a control switch 40. The control switch 40 is connected in series to each heating member 31 to form parallel branches, each parallel branch is connected in parallel, and the battery cells 21 are used to supply power to the parallel branches.

As an example, the battery apparatus 100 further comprises a fuse 50. The fuse 50 is connected in series to the plurality of parallel branches, and the battery cells 21 serve as a power supply to supply power to the parallel branches.

The control switch 40 includes, but is not limited to, a relay, a normal switch, a button switch, a rotary switch, or a smart switch. The control switch 40 may be determined according to the specific usage environment of the battery apparatus 100. For example, the battery apparatus 100 is applied to a vehicle, the control switch 40 may be a relay, and the opening and closing of the relay is controlled through a control unit of the battery apparatus 100 according to a difference between an external environment and an internal environment of the battery apparatus 100. For example, when the battery apparatus 100 is overheated during the heating process, same can be turned off by means of manually operating the control switch 40.

Therefore, each parallel branch may be operated or closed separately through the opening and closing of the control switch 40 according to the temperature of the external environment, so that the temperature of the battery cells 21 can be adjusted more flexibly, so as to reduce the influence of the low temperature on the battery cells 21, and save electrical energy at the same time.

In some embodiments, referring to FIGS. 7 and 8, two heating members 31 are provided, one of which is a first heating member 311 and the other of which is a second heating member 312. The first heating member 311 is located on one side of the second heating member 312 in a second direction Y. At least a portion of the first heating member 311 and at least a portion of the second heating member 312 are respectively used to heat the battery cells 21 that are outermost in the battery cell assembly 20 in the first direction X. The second direction Y respectively intersects the first direction X and the height direction Z of the case body 10.

One of the first heating member 311 and the second heating member 312 may be a main heating wire, and the other may be a secondary heating wire, that is, in the heating process, the main heating wire plays a main heating role, and the secondary heating wire plays an auxiliary heating role. The amount of heat generated by the main heating wire during operation may be set to be larger than the amount of heat generated by the secondary heating wire. The secondary heating wire may play an auxiliary heating role in heating the outermost battery cells 21 in the battery cell assembly 20 in the first direction X during the heating process. When the external environment temperature is too low, the secondary heating wire operates to reduce the heat loss of the outermost battery cells 21, thereby reducing the difference value between the operating temperature of the outermost battery cells 21 and the operating temperature of the middle battery cells 21. When the external environment temperature is not particularly low, the heat loss of the outermost battery cells 21 is small, and at this time, the secondary heating wire may not operate, and the main heating wire operates. When the external environment temperature is high, for example, when the battery apparatus 100 is applied to a vehicle, and the vehicle is driving in summer, both the main heating wire and the secondary heating wire may not operate.

Therefore, the battery cells 21 at both ends of the battery cell assembly 20 in the first direction X may be heated simultaneously or separately through two heating members 31, so as to perform switchover according to the changes of the external environment. Especially when the temperature of the external environment is not too low, starting one heating member 31 to operate can save electrical energy to improve the battery life of the battery apparatus 100.

In some embodiments, three or more battery cells 21 are provided in the battery cell assembly 20. The first heating member 311 comprises a first heating portion 3131, a second heating portion 3141, and a third heating portion 3151. The first heating portion 3131 is connected in series to one side of the second heating portion 3141 in the first direction X, and the third heating portion 3151 is connected in series to the other side of the second heating portion 3141 in the first direction X. The first heating portion 3131 and the third heating portion 3151 are respectively used to heat different battery cells 21 which are outermost in the battery cell assembly 20 in the first direction X, and the second heating portion 3141 is used to heat the battery cells 21 in the middle of the battery cell assembly 20.

The battery cells 21 in the middle of the battery cell assembly 20 refer to the battery cells 21 between the two outermost battery cells 21 of the battery cell assembly 20 in the first direction X.

As an example, the first heating portion 3131 is located in the first heating region, the second heating portion 3141 is located in the second heating region, and the third heating portion 3151 is located in the third heating region. The first heating portion 3131 and the third heating portion 3151 respectively have a bent portion, so that the first heating portion 3131 and the third heating portion 3151 can be coiled longer in a limited area to obtain higher heat on the premise that the current is unchanged, thereby improving the low temperature condition of the two outermost battery cells 21 of the battery cell assembly 20 in the first direction X. The second heating portion 3141 may be configured as a resistance wire having a bent portion, or may be configured as a straight resistance wire.

As an example, a ratio of the length of the heating member 31 of the first heating portion 3131 to the size of the first heating portion 3131 in the first direction X is P1, a ratio of the length of the heating member 31 of the second heating portion 3141 to the size of the second heating portion 3141 in the first direction X is P2, and a ratio of the length of the heating member 31 of the third heating portion 3151 to the size of the third heating portion 3151 in the first direction X is P3, where P1 is greater than P2, and P3 is greater than P2.

Therefore, different battery cells 21 which are outermost in the battery cell assembly 20 in the first direction X may be heated through the first heating portion 3131 and the third heating portion 3151. The second heating portion 3141 may heat different battery cells 21 which are outermost in the first direction X, and the second heating portion 3141 may heat the middle battery cells 21. The first heating portion 3131, the second heating portion 3141, and the third heating portion 3151 may be configured as regions with different heat generating amounts according to the temperature changes of the battery cells 21 when affected by the environment, so as to facilitate the adjustment of the temperature of the battery cells 21 at different positions.

In some embodiments, referring to FIG. 7, the second heating portion 3141 is a straight resistance wire, and a length direction of the straight resistance wire is the same as the first direction X. The straight resistance wire has a first connecting end and a second connecting end. The first connecting end is connected in series to the first heating portion 3131, and the second connecting end is connected in series to the third heating portion 3151.

The straight resistance wire refers to a resistance wire extending in a straight direction.

The first connecting section and the first heating portion 3131 may be connected by means of welding or integral molding, and the second connecting section and the third heating portion 3151 may be connected by means of welding or integral molding.

The second heating portion 3141 is a straight resistance wire. Compared with the second heating portion 3141 being a bent resistance wire, on the premise that the sizes of the two ends of the heating member 31 in the first direction X are unchanged and the voltages passing through the two ends of the heating member 31 are unchanged, since the length of the straight resistance wire is shorter than that of a bent resistance wire, the resistance value thereof is smaller and the current passing therethrough is larger, so that the first heating portion 3131 and the third heating portion 3151 can generate higher heat, thereby reducing the influence of the low temperature of the external environment on the outermost battery cells 21 of the battery cell assembly 20.

In some embodiments, referring to FIGS. 5 and 7, the first heating portion 3131 and the third heating portion 3151 respectively have a first bent portion.

Therefore, on the premise that the sizes of the first heating portion 3131 and the third heating portion 3151 in the first direction X are unchanged, the extending lengths of the first heating portion 3131 and the third heating portion 3151 may be increased by increasing the number of the bent portions, so as to increase the resistance values of the first heating portion 3131 and the third heating portion 3151.

In some embodiments, referring to FIG. 7, the second heating member 312 comprises a first heating section 3132, a second heating section 3142, and a third heating section 3152. The first heating section 3132 is connected in series to one end of the second heating section 3142 in the first direction X, and the third heating section 3152 is connected in series to the other end of the second heating section 3142 in the first direction X. The first heating section 3132 and the third heating section 3152 are used to heat different battery cells 21 which are outermost in the battery cell assembly 20 in the first direction X, and the second heating section 3142 is used to heat the battery cells 21 in the middle of the battery cell assembly 20.

The connection of the second heating section 3142 to the first heating section 3132 as well as the third heating section 3152, respectively, may be welded or integrally molded.

As an example, the first heating section 3132 is located in the first heating region, the second heating section 3142 is located in the second heating region, and the third heating section 3152 is located in the third heating region.

The first heating section 3132, the second heating section 3142, and the third heating section 3152 may all be straight resistance wires, or at least one of the first heating section 3132, the second heating section 3142, and the third heating section 3152 may be configured as a heating member 31 having a bent portion. For example, the first heating section 3132, the second heating section 3142, and the third heating section 3152 are all straight resistance wires. The first heating section 3132, the second heating section 3142, and the third heating section 3152 respectively comprise a plurality of straight resistance wires connected in parallel, that is, three straight resistance wires connected in parallel are connected in series, at which time a material with a large resistivity, such as a conductive material with a resistivity greater than 1 Ωmm²/m, may be used. When a material with the resistivity less than 1 Ωmm²/m and greater than 0.07 Ωmm²/m is used, the first heating section 3132, the second heating section 3142, and the third heating section 3152 may be respectively configured as the heating members 31 having a plurality of bent portions, and the heating area of the first heating section 3132, the second heating section 3142, and the third heating section 3152 may be increased by increasing the number of bent portions.

As an example, a ratio of the length of the heating member 31 of the first heating section 3132 to the size of the first heating section 3132 in the first direction X is Q1, a ratio of the length of the heating member 31 of the second heating section 3142 to the size of the second heating section 3142 in the first direction X is Q2, and a ratio of the length of the heating member 31 of the third heating section 3152 to the size of the third heating section 3152 in the first direction X is Q3, where Q1 is greater than Q2, and Q3 is greater than Q2.

Therefore, the first heating section 3132 may be combined with the first heating portion 3131, and the third heating section 3152 may be combined with the third heating portion 3151, so as to heat different battery cells 21 which are outermost in the battery cell assembly 20 in the first direction X, or the first heating section 3132 may be combined with the third heating portion 3151, and the third heating section 3152 may be combined with the first heating portion 3131, so as to heat different battery cells 21 which are outermost in the battery cell assembly 20 in the first direction X. Through the opening and closing of the control switch 40, the first heating section 3132 and the third heating section 3152 may be allowed to operate or not operate at the same time, and the first heating portion 3131 and the third heating portion 3151 may be allowed to operate or not operate at the same time, so that the temperature of the battery cell assembly 20 can be adjusted more flexibly.

In some embodiments, the first heating section 3132, the second heating section 3142, and the third heating section 3152 respectively have a second bent portion.

Therefore, the overall length of the second heating member 312 may be increased by bending the first heating section 3132, the second heating section 3142, and the third heating section 3152, so as to increase the heating area of the battery cells 21, thereby enabling the battery cells 21 to be heated more evenly.

In some embodiments, referring to FIG. 7, the size of the second heating section 3142 in the second direction Y is D1, the maximum size between the second heating section 3142 and the second heating portion 3141 in the second direction Y is D2, and the value range of D1/D2 is 0.1 to 0.98.

D1/D2 being equal to 0.1 can basically meet the heating area of the battery cells 21 in the middle of the battery cell assembly 20. As D1/D2 increases, the heating area of the battery cells 21 in the middle of the battery cell assembly 20 also increases, which will also increase the manufacturing cost. In order to take into account the manufacturing cost and better improve the temperature of the battery cells 21, the value range of D1/D2 is set to 0.1 to 0.98.

In some embodiments, referring to FIG. 7, the value range of D1/D2 is 0.7 to 0.95. On the premise that the manufacturing cost is taken into account and the battery cells 21 in the middle of the battery cell assembly 20 can perform better at the low temperature, the value range of D1/D2 is set to 0.7 to 0.95.

In some embodiments, referring to FIG. 7, the value range of D1 is 25 mm to 90 mm.

D1 being equal to 25 mm can basically meet the heating area of the battery cells 21 in the middle of the battery cell assembly 20. As D1 increases, the heating area of the battery cells 21 also increases, and when D1 is too large, the manufacturing cost will increase. In order to take into account the manufacturing cost and better improve the temperature of the battery cells 21, the value range of D1 is set to be between 25 mm to 90 mm, and at the same time, the heating requirements of battery cells 21 of different specifications may be met.

In some embodiments, referring to FIG. 7, the value range of D1 is 40 mm to 60 mm. Therefore, the heating area of the battery cells 21 may be further increased, and the manufacturing cost of the heating component may be reduced.

In some embodiments, referring to FIG. 2, a plurality of battery cell assemblies 20 are provided, and the heating component 30 is arranged between each battery cell assembly 20 and the bottom wall of the case body 10.

For example, the plurality of battery cell assemblies 20 may be arranged in the first direction X, or the plurality of battery cell assemblies 20 may be arranged in a rectangular array, which may be specifically set according to the space of the case body 10 and the capacity requirements for the use of the battery apparatus 100.

Therefore, in the process of the heating components 330 operating simultaneously to heat the battery cell assemblies 20, part of the heat is transferred to the bottom wall of the case body 10, and the bottom wall of the case body 10 may heat the plurality of battery cell assemblies 20 at the same time, so that the plurality of battery cell assemblies 20 are heated more evenly.

In some embodiments, the bottom wall of the case body 10 may be made of a metal material, for example, the bottom wall of the case body 10 may be made of an aluminum alloy, steel, etc.

For ease of description, the following embodiments are described by taking the electric apparatus of the present application as an example.

The electric apparatus comprises the battery apparatus 100 of the above embodiments. The battery apparatus 100 is used to provide electrical energy to the electric apparatus, and the electric apparatus may be, but is not limited to, the examples listed above.

Since the electric apparatus comprises all the technical features of the battery apparatus 100 described above, the effects are the same as those described above, and will not be repeated here.

In a first optional embodiment of the battery apparatus 100, referring to FIGS. 2, 4, and 6, the battery apparatus 100 comprises a case body 10, a battery cell assembly 20, and a heating component 30. Here, an interior of the case body 10 has an accommodating space. The battery cell assembly 20 is located in the accommodating space, and comprises a plurality of battery cells 21 arranged in a first direction X. The first direction X intersects a height direction Z of the case body 10. The heating component 30 is located in the accommodating space and arranged between the battery cell assembly 20 and the bottom wall of the case body 10. The heating component 30 comprises a heating member 31 and protective layers 32. The protective layers 32 are respectively provided on both sides of the heating member 31 in the height direction Z of the case body 10. The protective layers 32 on both sides of the heating member 31 are connected to each other. The protective layers 32 are in heat conductive connection with the heating member 31, and are insulated from the heating member 31. The protective layers 32 on both sides of the heating member 31 each have two layers. The heating member 31 is used to heat the battery cell assembly 20. The protective layer 32 comprises a reinforcing layer 321 and an insulating film layer 322. Here, in the height direction Z of the case body 10, the reinforcing layers 321 are respectively provided on both sides of the heating member 31. The insulating film layer 322 is disposed between the reinforcing layer 321 and the heating member 31, and the insulating film layer 322 is in heat conductive connection with the heating member 31. The reinforcing layer 321 may be, but is not limited to, an epoxy resin layer. The thickness of the reinforcing layer 321 is S, and the value range of S is 0.1 mm to 0.5 mm. The heating component 30 further comprises a glue layer 33. The glue layer 33 is located on one side of the reinforcing layer 321 facing away from the insulating layer, and the reinforcing layer 321 is bonded to the bottom wall of the case body 10 through the glue layer 33.

In this embodiment, by providing the protective layer 32, the probability of the heating component 30 being pierced and causing damage to the heating member 31 may be reduced, thereby improving the reliability of the operation of the heating component 30. Especially when there are a plurality of battery cell assemblies 20, the bottom of each battery cell assembly 20 is provided with the heating component 30, which may reduce the probability that some of the plurality of heating components 30 are damaged, so that the plurality of heating components 30 can heat the plurality of battery cell assemblies 20 at the same time, to allow the battery cell assemblies 20 to be heated more evenly, and the plurality of heating components 30 transfer part of the heat to the bottom wall of the case body 10. Since the area of the bottom wall is large, the bottom wall transfers the heat to the plurality of battery cell assemblies 20 in a heat radiation manner, so that the plurality of battery cell assemblies 20 can be heated more evenly.

In a second optional embodiment of the battery apparatus 100, referring to FIGS. 2 and 4-7, the battery apparatus 100 comprises a case body 10, a battery cell assembly 20, and a heating component 30. Here, an interior of the case body 10 has an accommodating space. The battery cell assembly 20 is located in the accommodating space, and comprises a plurality of battery cells 21 arranged in a first direction X. The first direction X intersects a height direction Z of the case body 10. The heating component 30 is located in the accommodating space and arranged between the battery cell assembly 20 and the bottom wall of the case body 10. The heating component 30 comprises a heating member 31 and protective layers 32. The protective layers 32 are respectively provided on both sides of the heating member 31 in the height direction Z of the case body 10. The protective layers 32 respectively on both sides of the heating member 31 are connected to each other. The protective layers 32 are in heat conductive connection with the heating member 31, and are insulated from the heating member 31. The protective layer 32 on at least one side of the heating member 31 has at least two layers. The heating member 31 is used to heat the battery cell assembly 20. The heating member 31 has a first heating region 313, a second heating region 314, and a third heating region 315. The first heating region 313 is provided on one side of the second heating region 314 in the first direction X, and the third heating region 315 is provided on the other side of the second heating region 314 in the first direction X. The first heating region 313 and the third heating region 315 are respectively used to heat different battery cells 21 which are outermost in the first direction X. The size of the first heating region 313 in the first direction X is L1, the size of the second heating region 314 in the first direction X is L2, the size of the third heating region 315 in the first direction X is L3, the resistance of the first heating region 313 is R1, the resistance of the second heating region 314 is R2, and the resistance of the third heating region 315 is R3, where R2/L2<R1/L1, and R2/L2<R3/L3. The first heating region 313, the second heating region 314, and the third heating region 315 respectively have a bent portion. In the extending direction of the first heating region 313, the length of the first heating region 313 is L4, in the extending direction of the second heating region 314, the length of the second heating region 314 is L5, and in the extending direction of the third heating region 315, the length of the third heating region 315 is L6, where L4/L1>L5/L2, and L6/L3>L5/L2.

In this embodiment, on the premise that the cross sections and materials of the first heating region 313, the second heating region 314, and the third heating region 315 are unchanged, L4/L1 being greater than L5/L2 and L6/L3 being greater than L5/L2 may increase the resistance value of the heating member 31 per unit length in the first heating region 313 and the third heating region 315 in the first direction X, so as to allow the heating member 31 to generate a larger amount of heat per unit length in the first heating region 313 and the third heating region 315 in the first direction X on the premise that the current is unchanged, thereby improving the situation where the temperature of the battery cells 21 at both ends is too low to reduce the temperature difference between different battery cells 21 during the heating process, thereby reducing the influence of the low temperature on the performance of the battery cells 21.

In a third optional embodiment of the battery apparatus 100, referring to FIGS. 2, 4, and 5, the battery apparatus 100 comprises all the features of the second optional embodiment. One heating member 31 is provided, and the heating member 31 has three heating sections connected in series, one of which is located in the second heating region 314, and the other two of which are located in the first heating region 313 and the third heating region 315 in one to-one correspondence. Each heating section has a plurality of bent portions.

In a fourth optional embodiment of the battery apparatus 100, referring to FIGS. 2 and 6-8, the battery apparatus 100 comprises all the features of the second optional embodiment. The heating component 30 comprises two heating members 31 connected in parallel. The two heating members 31 connected in parallel are configured to heat the battery cell assembly 20 separately or simultaneously. The battery apparatus 100 further comprises a control switch 40. The control switch 40 is connected in series to each heating member 31 to form parallel branches, each parallel branch is connected in parallel, and the battery cells 21 are used to supply power to the parallel branches. One heating member 31 is a first heating member 311, the other heating member 31 is a second heating member 312. The first heating member 311 is located on one side of the second heating member 312 in the second direction Y. At least a portion of the first heating member 311 and at least a portion of the second heating member 312 are respectively used to heat the battery cells 21 which are outermost in the battery cell assembly 20 in the first direction X. The second direction Y intersects the first direction X and the height direction Z of the case 10 respectively. Three or more battery cells 21 are provided in the battery cell assembly 20. The first heating member 311 comprises a first heating portion 3131, a second heating portion 3141, and a third heating portion 3151. The first heating portion 3131 is connected in series to one side of the second heating portion 3141 in the first direction X, and the third heating portion 3151 is connected in series to the other side of the second heating portion 3141 in the first direction X. The first heating portion 3131 and the third heating portion 3151 are respectively used to heat different battery cells 21 which are outermost in the battery cell assembly 20 in the first direction X, and the second heating portion 3141 is used to heat the battery cells 21 in the middle of the battery cell assembly 20. The first heating portion 3131 and the first heating section 3132 constitute a first heating region, the second heating portion 3141 and the second heating section 3142 constitute a second heating region, and the third heating portion 3151 and the third heating section 3152 constitute a third heating region. The second heating portion 3141 is a straight resistance wire, and a length direction of the straight resistance wire is the same as the first direction X. The straight resistance wire has a first connecting end and a second connecting end. The first connecting end is connected in series to the first heating portion 3131, and the second connecting end is connected in series to the third heating portion 3151. The first heating portion 3131 and the third heating portion 3151 respectively have a bent portion. The first heating section 3132, the second heating section 3142, and the third heating section 3152 respectively have a bent portion. The size of the second heating section 3142 in the second direction Y is D1, the maximum size between the second heating section 3142 and the second heating portion 3141 in the second direction Y is D2, and the value range of D1/D2 is 0.7 to 0.95. The value range of D1 is 25 mm to 90 mm.

In this embodiment, two heating members 31 connected in parallel are used, and the two heating members 31 connected in parallel are controlled to operate through the control switch 40, so that the heating temperature of the plurality of battery cells 21 can be adjusted more flexibly. Especially when the temperature of the external environment changes, the two heating members 31 may be allowed to operate simultaneously, operate separately, or not operate through the opening and closing of two control switches 40 according to the changes of the environment temperature. For example, at a high temperature in summer, the two heating members 31 do not operate. At a low temperature, the second heating member 312 may be controlled to operate. When the temperature is particularly low, for example, in a severe cold region in winter, the two heating members 31 may be controlled to operate simultaneously. The opening and closing of the two heating members 31 may be specifically set according to the environment temperature and the withstand temperature of the battery cells 21.

Finally, it should be noted that: the above embodiments are only used to illustrate the technical solutions of the present application, but not to limit them. Although the present application is described in detail with reference to the foregoing embodiments, those of ordinary skill in the art should understand that: the technical solutions described in the foregoing embodiments may still be modified, or some or all of the technical features therein may be replaced equivalently. These modifications or replacements do not cause the essence of the corresponding technical solutions to depart from the scope of the technical solutions of the embodiments of the present application, and should be covered within the scope of the claims and the description of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery apparatus, comprising:
a case body, wherein an interior of the case body has an accommodating space;
a battery cell assembly located in the accommodating space, wherein the battery cell assembly comprises a plurality of battery cells arranged in a first direction, and the first direction intersects a height direction of the case body; and
a heating component located in the accommodating space and arranged between the battery cell assembly and a bottom wall of the case body, wherein the heating component comprises a heating member and protective layers, wherein:
the protective layers are respectively provided on both sides of the heating member in the height direction of the case body, and the protective layers on both sides of the heating member are connected to each other;
the protective layers are insulated from the heating member; and
the heating member is configured to generate heat when energized and used to heat the battery cells.

2. The battery apparatus according to claim 1, wherein the protective layer of the heating member facing the bottom wall of the case body has at least two layers.

3. The battery apparatus according to claim 2, wherein the protective layer having at least two layers comprises:
an insulating film layer; and
a reinforcing layer located on one side of the insulating film layer facing away from the heating member, wherein the reinforcing layer is connected to the insulating film layer.

4. The battery apparatus according to claim 3, wherein the reinforcing layer comprises any one of an epoxy resin layer, a ceramic composite layer, a nylon polyester resin composite insulating film layer, or a polyurea coating layer.

5. The battery apparatus according to claim 3 or 4, wherein a thickness of the reinforcing layer is S, and a value range of S is 0.1 mm to 0.5 mm.

6. The battery apparatus according to claim 5, wherein the value range of S is 0.15 mm to 0.25 mm.

7. The battery apparatus according to any one of claims 3-5, wherein the heating component further comprises a glue layer, wherein the glue layer is located on one side of the reinforcing layer facing away from the insulating layer, and the reinforcing layer is bonded to the bottom wall of the case body through the glue layer.

8. The battery apparatus according to any one of claims 3-7, further comprising a structural glue layer located in the accommodating space and arranged between the battery cell assembly and the bottom wall of the case body, wherein the battery cell assembly is bonded to the bottom wall of the case body through the structural glue layer, and the heating component is located in the structural glue layer.

9. The battery apparatus according to any one of claims 1-8, wherein the heating member has a first heating region, a second heating region, and a third heating region, wherein:
the first heating region is provided on one side of the second heating region in the first direction, and the third heating region is provided on the other side of the second heating region in the first direction;
the first heating region and the third heating region are respectively used to heat different battery cells which are outermost in the first direction;
a size of the first heating region in the first direction is L1, a size of the second heating region in the first direction is L2, and a size of the third heating region in the first direction is L3; and
a resistance of the first heating region is R1, a resistance of the second heating region is R2, and a resistance of the third heating region is R3,
wherein R2/L2<R1/L1, and R2/L2<R3/L3.

10. The battery apparatus according to claim 9, wherein:
the first heating region, the second heating region, and the third heating region each have a bent portion; and
a length of the first heating region in an extending direction of the first heating region is L4, a length of the second heating region in an extending direction of the second heating region is L5, and a length of the third heating region in an extending direction of the third heating region is L6,
wherein L4/L1>L5/L2, and L6/L3>L5/L2.

11. The battery apparatus according to claim 9 or 10, wherein the heating component comprises one heating member, wherein the heating member has three heating sections connected in series, one of which is located in the second heating region, and the other two of which are located in the first heating region and the third heating region in one to-one correspondence.

12. The battery apparatus according to any one of claims 1-11, wherein the heating component comprises at least two heating members connected in parallel, wherein the at least two heating members connected in parallel are configured to heat the battery cell assembly separately or simultaneously.

13. The battery apparatus according to claim 12, further comprising a control switch, wherein the control switch is connected in series to each of the heating members to form parallel branches, each of the parallel branches being connected in parallel, and the battery cells are used to supply power to the parallel branches.

14. The battery apparatus according to claim 13, wherein the heating component comprises two heating members, one of which is a first heating member and the other of which is a second heating member, the first heating member being located on one side of the second heating member in a second direction, wherein:
at least a portion of the first heating member and at least a portion of the second heating member are respectively used to heat the battery cells that are outermost in the battery cell assembly in the first direction; and
the second direction intersects the first direction and the height direction of the case body.

15. The battery apparatus according to claim 14, wherein:
three or more battery cells are provided in the battery cell assembly; and
the first heating member comprises a first heating portion, a second heating portion, and a third heating portion, wherein:
the first heating portion is connected in series to one side of the second heating portion in the first direction, and the third heating portion is connected in series to the other side of the second heating portion in the first direction; and
the first heating portion and the third heating portion are respectively used to heat different battery cells which are outermost in the battery cell assembly in the first direction, and the second heating portion is used to heat the battery cells in the middle of the battery cell assembly.

16. The battery apparatus according to claim 15, wherein the second heating portion is a straight resistance wire, wherein a length direction of the straight resistance wire is the same as the first direction, and the straight resistance wire has a first connecting end and a second connecting end, wherein:
the first connecting end is connected in series to the first heating portion, and the second connecting end is connected in series to the third heating portion; and/or
the first heating portion and the third heating portion each have a first bent portion.

17. The battery apparatus according to claim 15 or 16, wherein the second heating member comprises a first heating section, a second heating section, and a third heating section, wherein:
the first heating section is connected in series to one end of the second heating section in the first direction, and the third heating section is connected in series to the other end of the second heating section in the first direction; and
the first heating section and the third heating section are used to heat different battery cells which are outermost in the battery cell assembly in the first direction, and the second heating section is used to heat the battery cells in the middle of the battery cell assembly.

18. The battery apparatus according to claim 17, wherein the first heating section, the second heating section, and the third heating section each have a second bent portion.

19. The battery apparatus according to claim 17 or 18, wherein a size of the second heating section in the second direction is D1, and a maximum size between the second heating section and the second heating portion in the second direction is D2, wherein a value range of D1/D2 is 0.1 to 0.98.

20. The battery apparatus according to claim 19, wherein the value range of D1/D2 is 0.7 to 0.95.

21. The battery apparatus according to claim 19 or 20, wherein a value range of D1 is 25 mm to 90 mm.

22. The battery apparatus according to claim 21, wherein the value range of D1 is 40 mm to 60 mm.

23. The battery apparatus according to any one of claims 1-22, wherein the battery apparatus comprises a plurality of battery cell assemblies, wherein a heating component is arranged between each of the battery cell assemblies and the bottom wall of the case body.

24. An electric apparatus, comprising the battery apparatus according to any one of claims 1-23, wherein the battery apparatus is used to provide electrical energy to the electric apparatus.
